# EUROPEAN PATENT APPLICATION

(11) **EP 4 475 364 A1**
(43) Date of publication of application: **11.12.2024**
(21) Application number: 23177641.0
(22) Date of filing: 06.06.2023
(51) Int. Cl.: H02G 3/22, F16L 5/02, F16L 5/08

(54) **WEDGE SEAL FOR ELECTROMAGNETIC SHIELDED CABLE AND PIPE TRANSITS**

(71) Applicant: Roxtec GmbH, 22143 Hamburg (DE)
(72) Inventor: Heyer, Thorsten, 22111 Hamburg (DE); Horn, Olaf, 22143 Hamburg (DE); Walluks Andre, 22844 Norderstedt (DE)
(74) Representative: Patentanwälte Olbricht Buchhold Keulertz

(57) **Abstract**

The invention relates to a wedge seal (10) for electromagnetic shielded cable and pipe transits for sealing a cable and/or pipe passage (100), the wedge seal (10) comprising two wedge-shaped pressure members (20), a wedge-shaped front tension member (30) and a wedge-shaped rear tension member (40), the wedge-shaped pressure members (20) and the wedge-shaped tension members (30, 40) each having a wide base side (21, 31, 41) and an opposite narrow tip side (22, 32, 42), wherein the tension members (30, 40) are connected to each other with at least one screw element (50) in such a way that they can be moved towards or away from each other by turning the screw element (50) wherein the pressure members (20) are held against each other by means of spring force and wherein the tension members (30, 40) are arranged between the pressure members (20) in such a way that the pressure members (20) can be moved towards or away from each other by turning the screw element (50), wherein the pressure members (20) are moved away from each other in direction P against the spring force when the tension members (30, 40) are moved towards each other by means of the screw element (50), and wherein the pressure members (20) are moved towards each other in direction S in-line with the spring force when the tension members (30, 40) are moved away from each other by means of the screw element (50). The wedge seal (10) comprises at least one EMC seal, wherein the EMC seal comprises a sealing layout (60) and metal layer (70), which covers the pressure members (20) at least partly.

## Description

The invention relates to a wedge seal according to the generic term of claim 1.

Such wedge seals are used, for example, in buildings, but also in particular on ships, for sealing inserted cables, and/or metal pipes (conduits) in wall and ceiling passages. On ships they are typically used for sealing cable and pipe penetrations of bulkhead and deck passages. In terms of building safety and fire protection, it is important that the seals are watertight and gas-tight and have at least flame-retardant properties.

In other words, the invention is related to a device that allows divisions, for example a bulkhead or deck, to be penetrated by service cables or pipes where it is necessary to maintain the integrity performance of the division for the fireproof, gas and watertight sealing of cables or pipes used in openings which requires as well electromagnetic shielding. Such penetrations typically consist of a stationary metal frame and modularly constructed, fully or partially elastic fitting module system placed above and/or next to each other between the cables or pipes. These modular fitting modules forms inside the opening of the stationary metal frame a closed shielding wall around the cables or pipes. To obtain the required integrity performance of the division, the fitting module system needs to be compressed inside the opening of the frame by a device with pressure and wedge elements of an adjustable wedge seal.

For example, DE 196 02 760 A1 discloses a cable bushing with such a wedge seal. The wedge seal has two wedge-shaped tension members and two wedge-shaped pressure members that can be moved against each other by means of screw elements. With the aid of this wedge seal, a watertight, gas-tight and flame-retardant separation of the areas that would otherwise be connected to each other via the bushing is achieved. This solution, however, does not fulfil the function of electromagnetic shielding over the required frequency range. Electromagnetic waves can pass through the wedge seal.

To overcome this problem, EP 0 590 410 B1 and EP 1 479 958 B1, for example, disclose a cable sealing system, which forms a watertight, gas-tight, flame-retardant separation of areas with electromagnetic shielding function (i.e. conductive barrier throughout the bushing). However, the production of such a sealing systems is relatively costly. It also requires an elaborate stationary metal frame, which is costly, space consuming and heavy, which has an opening geometry limited to a rectangular shape

EP 1 479 958 B1, on the other hand, describes the coating of electrically non-conductive material, which has on its surface an applied coating of electrically conductive and ductile materials in the form of metals or metal alloys to form a closed electromagnetic barrier of the cable transit. This surface coating is expensive and not ideal for use in rough everyday use, so it is necessary to find a simple and durable solution that electromagnetically seals the wedge seal and is less sensitive during installation and life cycle time and environmental influences.

In this respect, the problem to be solved is to provide an improved wedge seal that creates a watertight, gas-tight and flame-retardant seal between two areas which are connected by a cable/pipe passage, wherein the wedge seal also features an electromagnetic shielding over the entire area of the wedge seal. The complete solution with electromagnetic shielding should be as inexpensive as possible to realize and as easy as possible to manufacture and install.

Main features of the invention are given in the characterizing part of claim 1. Embodiments are the subject of claims 2 to 15.

Proposed is a wedge seal for electromagnetic shielded cable and pipe transits for sealing a cable and/or pipe passage, the wedge seal comprising two wedge-shaped pressure members, a wedge-shaped front tension member and a wedge-shaped rear tension member,
- the wedge-shaped pressure members and the wedge-shaped tension members each having a wide base side and an opposite narrow tip side,
- wherein the tension members are connected to each other with at least one screw element in such a way that they can be moved towards or away from each other by turning the screw element,
- wherein the pressure members are connected with each other by means of spring force,
- and wherein the tension members are arranged between the pressure members in such a way that the pressure members can be moved towards or away from each other by turning the screw element,
- wherein the pressure members are moved away from each other in direction P against the spring force when the tension members are moved towards each other by means of the screw element, and wherein the pressure members are moved towards each other in direction S in-line with the spring force when the tension members are moved away from each other by means of the screw element,
wherein the wedge seal comprises at least one EMC seal, wherein the EMC seal comprises a sealing layout and metal layer, which covers then pressure members at least partly.

The wedge seal has a front side and a rear side. The front side is the side, which is faced by the base side of the front tension member. The rear side is the side, which is faced by the base side of the rear tension member. When the wedge seal is mounted in the cable and/or pipe passage, the front side is the side that is accessible for an installer, while the rear side can be inaccessible. In other words: the front side of the wedge seal is the operating side. The base side of the tension members is also referred to as the front side of the tension members.

The cable or pipe passage has a metal frame. The metal frame is inserted into a metallic division. The metallic division can be, for example, a bulkhead or deck. The cables and/or pipes that should passage through the division are arranged in this metal frame together with the wedge seal. Each of the cables and pipes is lead-through a sealing block, which holds and seals the cable and/or pipe. For closing and sealing the whole arrangement, the wedge seal is inserted into the metal frame and is then fastened. By fastening the wedge seal the wedge seal is compressed. The wedge shaped form of the pressure and tension members allows these members to slide against each other and thereby to change the height and thickness of the wedge seal. The wedge seal is inserted while having the minimum design height. This is achieved when the tension members are at a maximum distance from one another and the spring force holds the pressure members as close as possible to each other.

After inserting the wedge seal into the metal frame, the screw element is used to tension the wedge seal. By tightening the screw element, the tension members are moved towards each other. As a result, the pressure members are pressed apart against the spring force.

This leads to a compression of the sealing blocks with cables and pipes against each other and the frame and thus forming the completed seal. The sealing blocks can be formed as two halves. The sealing blocks and/or sealing block halves consist of metal cushion contacting the metal shield of the partly stripped cable or the metallic pipes. Accordingly, also the sealing blocks contribute to the formation of an EMC barrier. Two rubber parts attached in front and back of the metal cushion seal the cable/ pipe against water and gas pressure and build a fire barrier as well.

All in all, the cable and/or pipe passage thus consists of
- a stationary metal frame,
- fully or partially elastic packing pieces with EMC barrier arranged in a modular fashion above and/or next to each other, through which the cables/pipes are lead-through,
- metallic anchor plates between the layers of elastic packing pieces and wedge and
- the wedge seal with EMC seal, which can be adjusted by means of the tension and pressure members.

The EMC seal of the wedge seal together with the metal frame and the elastic packing pieces with EMC barrier and the partly metal shielded pressure members forms the complete EMC shielding of the cable/pipe passage.

In a first variant, the wedge seal has only one EMC seal, which is located at the front end of the wedge seal.

In a second variant, the wedge seal has two EMC seals. A first EMC seal is located at the front end of the wedge seal. The second EMC seal is located at the rear end of the wedge seal.

In a third variant, the wedge seal has an EMC seal on one side and a shock protection seal on the other side. Preferably, the EMC seal is located at the front end of the wedge seal, while the shock protection seal is located at the rear end of the wedge seal.

In any event, the EMC seal comprises a sealing layout and a metal layer, which covers the tension members at least partly. For example, the metal layer can be a metal foil that wraps the part of the tension members which faces towards the sealing layout. Tensioning the wedge seal brings the sealing layout in contact with the metal layer, and thereby the EMC seal is formed over the whole surface of the wedge seal.

The metal layers arranged at the pressure members results in that the pressure members have electrically conductive layers which at least partially cover the surface of the pressure members. The electrically conductive layers are preferably formed in the area of the pressure members facing the front side of the wedge seal and the top and bottom sides, connecting to the EMC barrier of the elastic packing pieces for cables/pipes and the metallic anchor plates. In particular, the conductive layers are arranged also on the outside of the members and in the same time in contact with the metallic anchor plate and the metal cushion of the sealing blocks, which come into contact with the metal frame when the tension members are tightened, and on the front side of the pressure members, which face the operating side of the wedge seal. When the tension members are tightened, the EMC seal arranged on the front side of the front tension member can then be brought into electrically conductive contact with that part of the electrically conductive layers which is oriented towards the operating side. It is advantageous if the EMC seal projects slightly beyond the front side of the tension member, at least in the final assembled state to achieve an electromagnetic tight seal compressed to the front side of the tension member and the metallic anchor plate.

In other words: The EMC seal of the wedge seal comprises a metal shield which at least partly covers the pressure members and a sealing layout. A metal foil that is folded around the side of the pressure members can form that metal shield cover. Each pressure member can have such a metal shield. By fastening the EMC seal, i.e. by tensioning the tension members by the help of the screw elements, the sealing layout is pressed against the metal shield cover. Further, the sealing layout gets in contact with the metallic frame of the passage and/or with at least one metallic anchor plate.

This arrangement results in the following: at the front side, and the partly on the front side metal shielded pressure members inside the wedge which connects the frame as well as the EMC seal with the cable/pipe packings forms a complete electromagnetic barrier.

The improved wedge seal works in conjunction with the EMC packing with metal cushions (modules sealing and holding the cables/pipes) enabling the use of much simpler frames and resulting in a more efficient use of the given space (frames with radius and packings with radius that prevents cracks in the divisions of the structure when exposed to stress forces).

Recognizably, it is of advantage, that the wedge seal has an operating side and that the EMC seal is arranged on the operating side of the wedge seal. By placing the EMC seal on the operating side of the wedge seal, it is possible to install it within a protected zone, so that the EMC seal is not exposed to weather conditions and, at the same time, tampering or sabotage of the feedthrough is made much more difficult. The operating side is also referred to as the front side of the wedge seal.

Further, it is favorable, if the EMC seal in the mounted state of the wedge seal forms a flat surface with the metal frame of the cable and/or pipe passage in which the wedge seal is mounted. This can be achieved in particular by the tension members sliding towards each other when the screw element is tightened. At the beginning of assembly, the front side of the front tension member, which still protrudes beyond the plane of the metal frame, moves towards the division plane in which the metal frame is mounted until the EMC seal arranged on the front side of the front tension member finally forms the desired flat surface with the metal frame.

Accordingly, it is preferred, that the sealing layout comprises an in thickness flexible and compressible metallic wire mesh. This wire mesh, preferably, is the part of the EMC seal making contact with the conductive layers of the pressure members and the metal frame. It is flexible to compensate height differences between the metallic frame and the wedge members and form an EMC barrier in these areas. The metallic wire mesh extends along the entire front side of the front tension member.

For providing a sound EMC seal, it is further preferred, that inside the wire mesh, a flexible metal wire sealing cord and/or a metal pad is inserted. By connecting the wire mesh to the conductive layers and thus to the metal frame of the cable and/or conduit bushing, the EMC seal shields the entire area of the wedge seal, including the central area between the sliding surfaces of the tension and compression members on each other.

In another embodiment, the sealing layout is a flexible metal-mesh profile. This flexible metal mesh profile has the same function of compensating height differences between the frame and the wedge members and thus complete the EMC barrier in these areas.

It is also favorable, that the sealing layout has at least one opening for receiving the screw element. The opening is preferably round, or its shape corresponds to the shape of the screw element to be passed through. The screw element has an operating device. The operating device can be a nut head or the like to which, for example, a wrench can be applied. The operating device is arranged in the region of the front side of the front tension member. It is particularly advantageous if the operating device has a larger diameter than the screw element, regardless of the shape of the diameter. In this case, the diameter of the operating device is also larger than the diameter of the opening for receiving the screw element. When the screw element is tightened to tension the wedge seal, the operating element can simultaneously fix the EMC seal on the front side of the front tension member in the correct position. The EMC seal and the sealing layout respectively is clamped and fixed either directly or indirectly between the operating element and the front side of the front tension member. It is particularly advantageous if there are two screw elements and therefore also two openings for receiving the screw elements. In this way, the EMC seal is fixed at least two points and cannot twist.

In any event, it is preferred, that the wedge seal comprises a metal sheet. The metal sheet ensures that the EMC-seal is applied tightly over the entire surface of the wedge seal with an overlap of - preferably 4/10 - of the metallic frame front side dimension left and right of the wedge position in the frame and that a complete shielding and a corresponding contact with the metal frame of the cable and/or pipe passage is ensured.

Preferably, the metal sheet is flat or U-shaped. When the metal sheet is U-shaped, for example, it is configured such that the bottom of the U forms a wide flat plate which, when assembled, extends along substantially the entire area of the front sides of the front side tension member. The front side of the front side tension member has a substantially rectangular basic shape with two long sides and two short sides. The legs of the U are then preferably bent outwards, i.e. towards the operating side.

In any event, it is preferred that the metal sheet has at least one opening for receiving the screw element. In this way, the metal sheet can also be securely fixed in position on the wedge seal, as already described above for the EMC-seal and sealing layout respectively. This supports the stationary fixation of the sealing layout. For the design of the openings, reference is made to what has already been described above with regard to the openings of the EMC-seal, which also applies in the same way to the openings of the metal sheet in order to avoid unnecessary duplication.

In a first embodiment, it is preferred that the sealing layout is arranged between the metal sheet and the front of the front tension member forming a closed electromagnetic barrier connected to the passage frame and pipe / cable packages. In this arrangement, the sealing layout is flattened and compressed by the metal sheet when the wedge seal is tensioned. The size of the metal plate and sealing layout is conceived in such a way, that when compressed it connects with the metal frame of the passage, and with the electrically conductive layers on the pressure members. It can be seen that it is favorable if the metal sheet is sturdy enough so that it can compress the metal wire or metal fabric of the sealing layout, when forced towards the front of the front tension member. In other words, in this arrangement, the metal sheet also serves as a pressure element that distributes and transmits the pressure of the operating devices of the screw elements evenly over the entire surface of the EMC seal/sealing layout respectively. In the process, the EMC seal is compressed so that after the wedge seal is fully braced with the electrically conductive layers of the pressure members, the bolts, the nuts and the frame, a continuous device for electromagnetic sealing and shielding of the feedthrough is formed. The screw elements need to be connected, i.e. grounded, electrically to the metallic frame so that the screw elements did not act as antenna for the electromagnetic waves, what should not transit the penetration.

In another embodiment, the metal sheet is conceived as a two-part item. One part is a metal base plate fixed on the front side of the front tension member. The second part is a metal frame with a circumferential flexible EMC seal. The geometry of the metal frame protrudes over the base plate, the conductive layers of the wedge pressure members and the metal frame of the passage. After the wedge seal with the fixed metal base plate is tensioned, the metal frame with the EMC seal is fixed onto the baseplate, in effect compressing the continuous circumferential EMC seal over the base plate, metal frame of the passage and conductive layers of the pressure members forming the complete electromagnetic barrier. In this embodiment, the metal base plate has corresponding receptacles for the screw elements and can also be held firmly in position with the aid of the operating devices. In this embodiment, the EMC seal is preferably a flexible metal-fabric profile. This flexible metal-fabric profile is attached to the metal frame. The frame is used to attach the metal-fabric profile to the base plate, metal frame of passage and the conductive layers of the wedge pressure members. For example, the frame can be screwed onto the metal base plate. The metal frame can have one or more appropriately sized openings through which the operating devices of the screw elements can be passed.

In any case, it is favorable if, in the assembled state, EMC metal anchor plates are arranged above and below the wedge seal. These anchor plates can, for example, support and improve contact with the metal frame and the metal cushion of the sealing blocks.

Further, it is favorable if the EMC seal has an overlap of the metallic frame front side left and right of the wedge position in the frame in the assembled state. The overlap is preferably 4/10 of the metallic frame front side dimension. In particular, when used in a so-called multi-chamber frame, this prevents mutual interference between the EMC seals and thus also between the wedge seals. The wedge seals can be used as required within the available frame height.

In a further embodiment, it is preferred, that the wedge seal further comprises a shock proof arrangement.

Further features, details and advantages of the invention will be apparent from the wording of the claims and from the following description of embodiments based on the drawings. Showing:
- Fig. 1: a three-dimensional exploded view of a first variant of a wedge seal;
- Fig. 2: a three-dimensional exploded view of a first variant of a wedge seal;
- Fig. 3: a schematic view onto a cable bushing with inserted wedge seal;
- Fig. 4a: a schematic cross-sectional view of a mounted first variant of a wedge seal;
- Fig. 4b: an exploded cross-sectional view of the wedge seal variant of Fig. 4a;
- Fig. 4c: a further cross-sectional view of the wedge seal variant of Fig. 4a;
- Fig. 4d: a further cross-sectional view of the wedge seal variant of Fig. 4a;
- Fig. 5a: a schematic cross-sectional view of a mounted further variant of a wedge seal;
- Fig. 5b: an exploded cross-sectional view of the wedge seal variant of Fig. 5a;
- Fig. 5c: a further cross-sectional view of the wedge seal variant of Fig. 5a;
- Fig. 5d: a further cross-sectional view of the wedge seal variant of Fig. 5a;
- Fig. 6a: a schematic cross-sectional view of a mounted further variant of a wedge seal;
- Fig. 6b: an exploded cross-sectional view of the wedge seal variant of Fig 6a;
- Fig. 6c: a further cross-sectional view of the wedge seal variant of Fig. 6a;
- Fig. 6d: a further cross-sectional view of the wedge seal variant of Fig. 6a;
- Fig. 7a: a schematic cross-sectional view of a mounted further variant of a wedge seal;
- Fig. 7b: an exploded cross-sectional view of the wedge seal variant of Fig 7a;
- Fig. 7c: a further cross-sectional view of the wedge seal variant of Fig. 7a;
- Fig. 7d: a further cross-sectional view of the wedge seal variant of Fig. 7a;
- Fig. 8a: a schematic cross-sectional view of a mounted further variant of a wedge seal;
- Fig. 8b: an exploded cross-sectional view of the wedge seal variant of Fig 8a;
- Fig. 8c: a further cross-sectional view of the wedge seal variant of Fig. 8a;
- Fig. 8d: a further cross-sectional view of the wedge seal variant of Fig. 8a;
- Fig. 9a: a schematic cross-sectional view of a mounted further variant of a wedge seal;
- Fig. 9b: an exploded cross-sectional view of the wedge seal variant of Fig 9a;
- Fig. 9c: a further cross-sectional view of the wedge seal variant of Fig. 9a;
- Fig. 9d: a further cross-sectional view of the wedge seal variant of Fig. 9a.

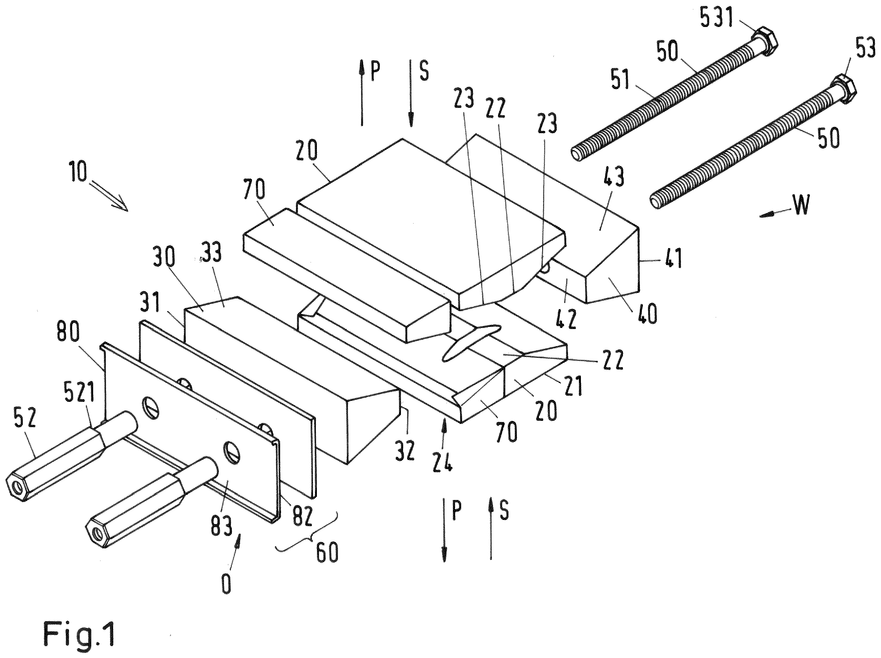

Fig. 1 shows an exploded view of a wedge seal 10. The wedge seal has two pressure members 20, a front tension member 30 and a rear tension member 40. Each pressure member 20 has a wide base side 21 and a pointed tip side 22. The tip side 22 has a flat end. Furthermore, each pressure member 20 has a front side 24. A continuous conductive layer 70 is arranged in the area of the front side 24, in the area of the base side 21 and the sides facing the frames. The pressure members 20 are arranged in such a way that their flat sides 22 face each other and are oriented towards the interior of the wedge seal.

The front tension member 30 and the rear tension member 40 also each have a wide base side 31, 41 and a pointed tip side 32, 43. The base side 31 of the front tension member 30 is also referred to as the front side 31 of the front tension member 30. Like the pressure members 20, the tension members 30, 40 are arranged relative to each other such that their tip sides 32, 42 face each other and are oriented toward the interior of the wedge seal 10. The sealing layout 60 is arranged at the front side 31 of the front tension member 30.

The wedge seal 10 has an operating side O and a wall side W. The operating side O is the side from which an installer operates and tensions the wedge seal 10 during installation. Fig. 1 shows that the sealing layout 60 is arranged at the operating side O of the wedge seal 10.

Both the pressure members 20 and the tension members 30, 40 have angled sides 23, 43. An angled side 23 of a pressure member 20 and an angled side 43, 33 of a tension member are in contact with each other and can slide along each other when the wedge seal 10 is tensioned. It can be seen in Fig. 1 that the tension members 30, 40 can push the pressure members 20 apart in the direction P when the tension members 30, 40 move towards each other. The pressure members 20 are pressed together by the tension members 30, 40. The pressure members 20 are supported with the aid of a spring force in the opposite direction to P. The tension members 30, 40 are held together with a spring force in the opposite direction to P. The tension members 30, 40 are moved towards or apart from each other by means of a screw element 50 and the spring force. The spring force can be applied, for example, with the aid of a tension spring. The tension spring or the element applying the spring force is not shown in the figures because it would lie outside the sectional plane shown schematically.

Fig. 1 also shows one example for the screw element. However, this is of course only to illustrate how the screw element 50 and the tension members 30, 40 work together. Other embodiments are of course possible. The shown screw element 50 has a thread rod 51, an operating device 52 and a locknut 53. The thread rod 51 protrudes the front and rear tension member 30, 40. The locknut 53 is arranged at the base side 41 of the rear tension member 40. The operating device 52 is arranged at the base side 31 of the front tension member 30. The thread rod 51 is arranged in a in a bore. Each one of the locknut 53 and the operating device 52 has a bottom side 521, 531. The diameter of the bore is smaller than the diameter of the operating device 52 or the locknut 53. Accordingly if the thread rod 51 is screwed for tensioning the wedge seal, the bottom 531 of the locknut 53 presses against the base side 41 of the rear tension member 40. As a consequence the tension members 30, 40 move towards each other.

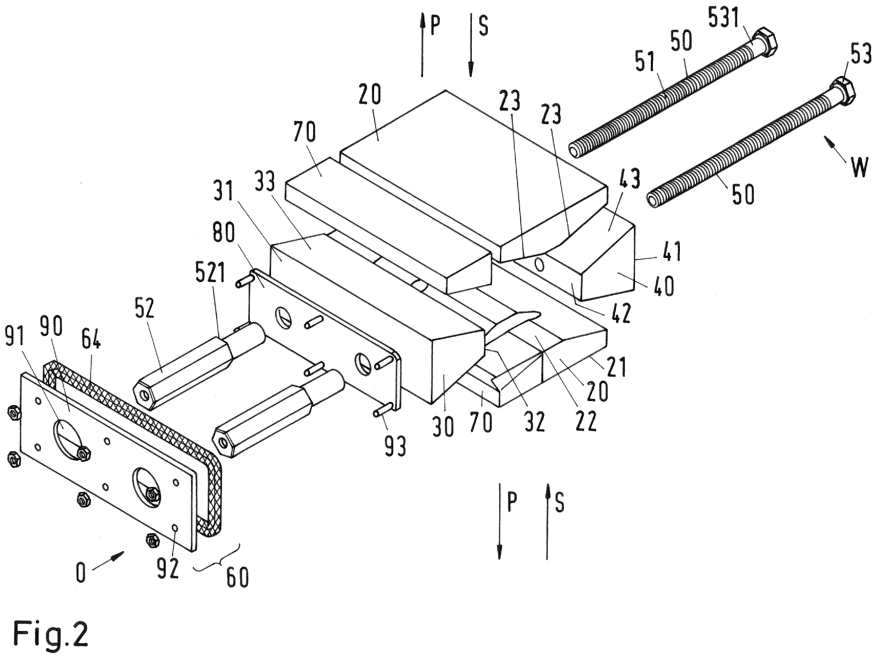

Fig. 2 shows an alternative embodiment of the sealing layout 60 and it's arrangement at the wedge seal 10. As described above the wedge seal 10 has two pressure members 20, a front tension member 30 and a rear tension member 40 as well as a screw element 50. The pressure members 20 do have conductive layers 70. With regard to the arrangement and designation of the individual components which are identical between the two embodiments of Fig. 1 and Fig. 2, reference is made here to what has already been stated with regard to Fig. 1 in order to avoid unnecessary duplication. Identical reference numbers also designate identical components.

The embodiment example of Fig. 2 differs from the embodiment example shown in Fig. 1 in the arrangement of the sealing layout 60. In the second embodiment it can be seen that the metal sheet 80 is arranged in direct contact with the front side 31 of the front tension member 30. Again, the metal sheet 80 is fixed and held in the desired position by the operating device 50.

In this embodiment example, the sealing layout 60 has a metal fabric profile 64 attached to a frame 90. The metal frame 90 has an opening 91, which is designed in such a way that the respective operating devices 52 of all screw elements 50 can be guided through it. The metal frame 90 can thus be plugged on after the wedge seal 10 has been tensioned and the metal sheet 80 has been mounted. The metal frame 90 also has one or more mountings 92, into each of which a fastening means 93 can be inserted. With the aid of these fastening means 93, the metal frame 90 can be positively fastened to the metal sheet 80. The metal sheet 80 can also have mountings 84 for this purpose. It can be seen in Fig. 2 that the sealing layout 60 is clamped between the metal frame 90 and the metal sheet 80, the conductive layer 70 and the metal frame of the passage, creating a circumferential gapless electrically conductive contact between all members.

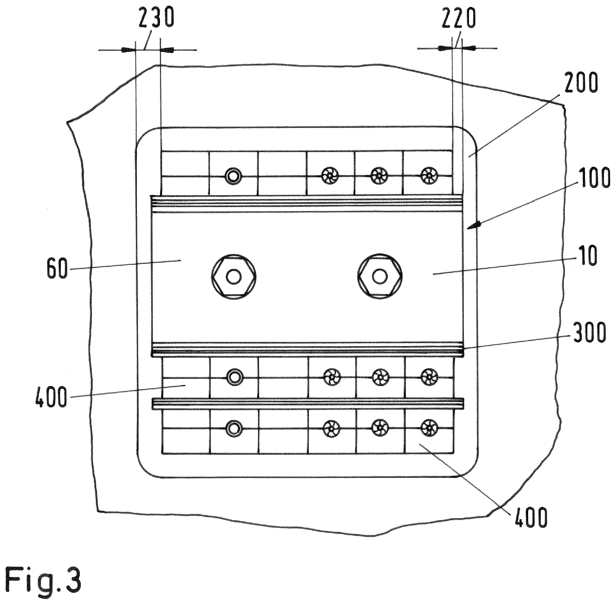

Fig. 3 shows a schematic view of a wedge seal 10 inserted and tensioned in a corresponding cable and/or pipe passage 100. The cable and/or pipe passage 100 has a metallic frame 200. In the illustrated embodiment, the metallic frame 200 is shown only in section. Its shape and size may vary depending on the number of cables and/or pipes to be passed. Various packaging 400 of cables and/or pipes are arranged in the metallic frame 200. The arrangement of these packaging 400 is also shown here only schematically and can be done in a variety of ways. The wedge seal 10 is inserted in the metallic frame 200 to seal the finished arrangement. An EMC anchor plate 300 is arranged on the upper and underside. Not shown but conceivable is that such an EMC anchor plate is also arranged on the upper side-of the wedge seal 10. The conductive layers 70 are in contact with the metallic frame 200 (not visible in Fig. 3 due to the metallic frame 200). The operating devices 52 hold the metal sheet 80 in contact with the EMC seal 60, which in turn is also in contact with the conductive layers 70. It can be seen that the EMC seal 60 in this way shields the entire area occupied by the wedge seal 10 in the metallic frame 200. It is irrelevant whether the metal sheet 80 is arranged above the EMC seal 60 as in the embodiment shown here, which corresponds to the embodiment in Fig. 1, or whether the EMC seal 60 is arranged as described in the embodiment (not shown here, but equally conceivable) that corresponds to Fig. 2. The EMC seal has an overlap (220) of the metallic frame front side left and right of the wedge position in the frame in the assembled state. The overlap is preferably 4/10 of the metallic frame front side dimension (230).

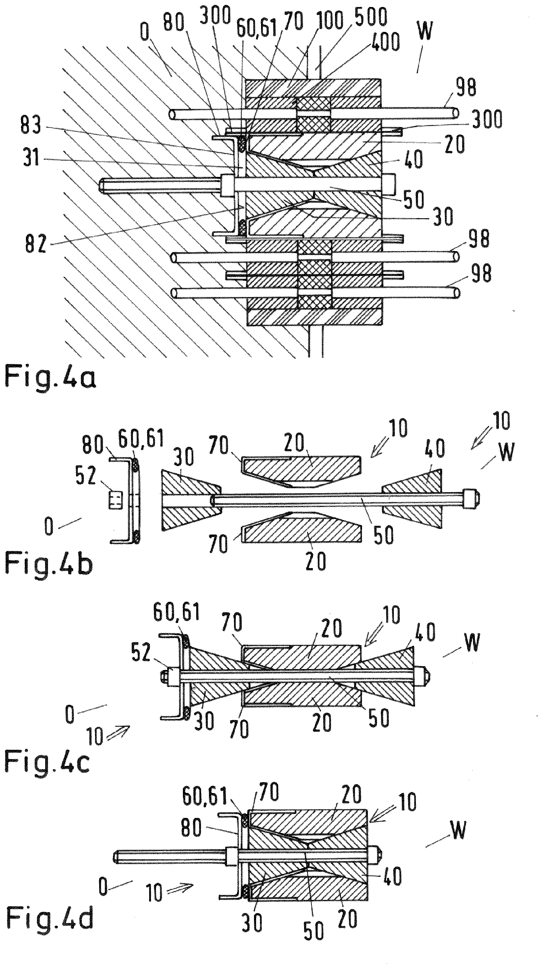

In the example shown in Fig. 4a, the desired shielding is formed by the interaction of the conductive layers 70 with a structure arranged on the front side 31 of the front tension member 30, which comprises the sealing layout 60 and a metal sheet 80. The metal sheet 80 has a front side 83 and a back side 82. The sealing layout 60 has a folded metallic wire mesh 61. Metal wire sealing cords or metal pads are inserted in the metallic wire mesh 61. The sealing layout 60 is positioned between the back side 82 of the metal sheet 80 and the front side 31 of the front tension member 30. Fig. 4a, 4b, 4c and 4d show both, the sealing layout 60, in particular the metallic wire mesh 61, and the metal sheet 80 have openings through which the screw element 50 can be passed. These openings are smaller than the diameter of the operating device 52. The wedge seal 10 is tensioned with the aid of the screw member 50, the operating device 52 therefore presses against the front side 83 of the metal sheet 80. As a result, the EMC seal 60 is clamped between the metal sheet 80 and the front side 31 of the front tension member 30.

Fig. 4a shows a completed transit, namely a metal frame 100 installed into the division with cables 98, modules 400 and anchor plates 300.

Fig. 4b is a schematic section trough the complete EMC barrier of all grounded metal parts, namely conductive layers 70, sealing layout 60, metal sheet 80 and screw element 50, as well as the elastic rubber parts of the wedge seal 10, namely pressure members 20 and tension members 30, 40. As can also be seen from Fig. 4a, the complete EMC barrier formed by the grounded metal parts prohibits that the electromagnetic waves from side "O" from getting through the penetration to side "W" or vice versa.

Fig. 4c shows the partly compressed wedge 10. Numbers indicate the same parts as in Fig. 4a, 4b and 4d.

Fig. 4d shows the completed installation with fully compressed wedge seal. Again, numbers indicate the same parts as described above for Fig. 4a, 4b and 4d.

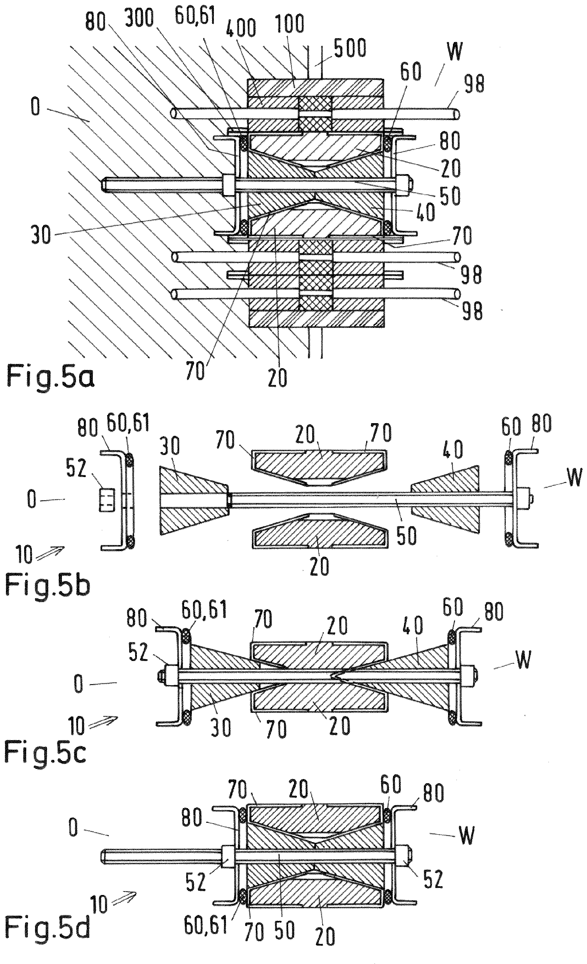

Like Fig. 4a, also Fig. 5a shows a completed transit, namely a metal frame 100 installed into the division with cables 98, modules 400 and anchor plates 300. With regard to the arrangement and designation of the individual components which are identical between the two embodiments of Fig. 4a, 4b, 4c, 4d and Fig. 5a, 5b, 5c, 5d reference is made here to what has already been stated with regard to Fig. 4a, 4b, 4c, 4d in order to avoid unnecessary duplication. Identical reference numbers also designate identical components.

Fig. 5b is a schematic section trough the complete EMC barrier of all grounded metal parts, namely conductive layers 70, sealing layout 60, metal sheet 80 and screw element 50, as well as the elastic rubber parts of the wedge seal 10, namely pressure members 20 and tension members 30, 40. As can also be seen from Fig. 5a, the complete EMC barrier formed by the grounded metal parts prohibits that the electromagnetic waves from side "O" from getting through the penetration to side "W" or vice versa.

Fig. 5c shows the partly compressed wedge 10. Numbers indicate the same parts as in Fig. 5a, 5b and 5d.

Fig. 5d shows the completed installation with fully compressed wedge seal. Again, numbers indicate the same parts as described above for Fig. 5a, 5b and 5d.

The embodiment example of Fig. 5a, 5b, 5c and 5d differs from the embodiment example shown in Fig. 4a, 4b, 4c and 4d by the number of sealing arrangements. While them embodiment shown in Fig. 4a, 4b, 4c and 4d has an sealing layout 60 and metal sheet 80 only on the operating side O, the embodiment shown in Fig. 5a, 5b, 5c and 5d has also an according EMC barrier formed at the opposing side W. In both cases the EMC barrier corresponds to the embodiment also shown in Fig. 1.

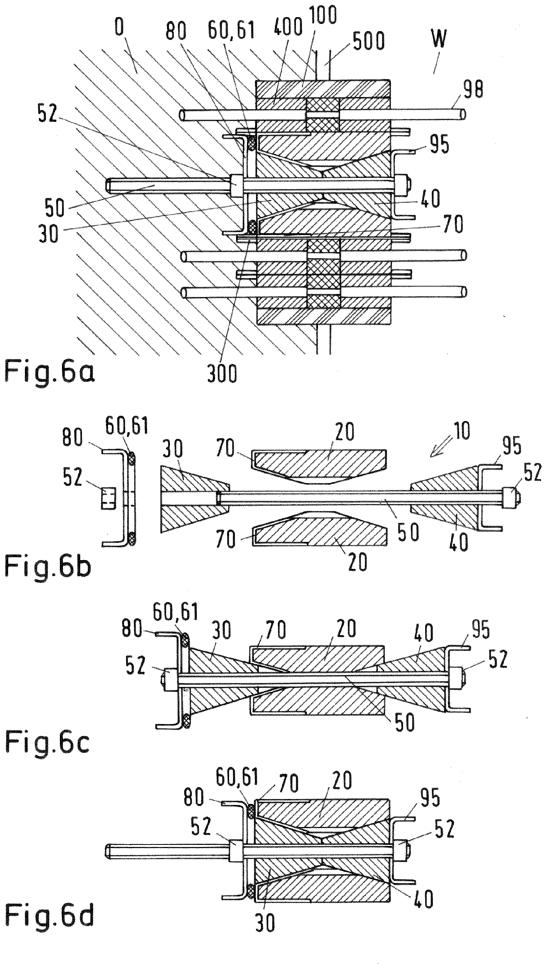

Like Fig. 4a, and 5a also Fig. 6a shows a completed transit, namely a metal frame 100 installed into the division with cables 98, modules 400 and anchor plates 300. With regard to the arrangement and designation of the individual components which are identical between the two embodiments of Fig. 4a, 4b, 4c, 4d and Fig. 6a, 6b, 6c, 6d reference is made here to what has already been stated with regard to Fig. 4a, 4b, 4c, 4d in order to avoid unnecessary duplication. Identical reference numbers also designate identical components.

Fig. 6b is a schematic section trough the complete EMC barrier of all grounded metal parts, namely conductive layers 70, sealing layout 60, metal sheet 80 and screw element 50, as well as the elastic rubber parts of the wedge seal 10, namely pressure members 20 and tension members 30, 40. As can also be seen from Fig. 6a, the complete EMC barrier formed by the grounded metal parts prohibits that the electromagnetic waves from side "O" from getting through the penetration to side "W" or vice versa.

Fig. 6c shows the partly compressed wedge 10. Numbers indicate the same parts as in Fig. 6a, 6b and 6d.

Fig. 6d shows the completed installation with fully compressed wedge seal. Again, numbers indicate the same parts as described above for Fig. 6a, 6b and 6d.

The embodiment example of Fig. 6a, 6b, 6c and 6d differs from the embodiment example shown in Fig. 4a, 4b, 4c and 4d by having a shock proof plate 95 arranged at the side "W" opposite the EMC seal arranged at side "O" In both cases the EMC barrier at side "O" corresponds to the embodiment also shown in Fig. 1.

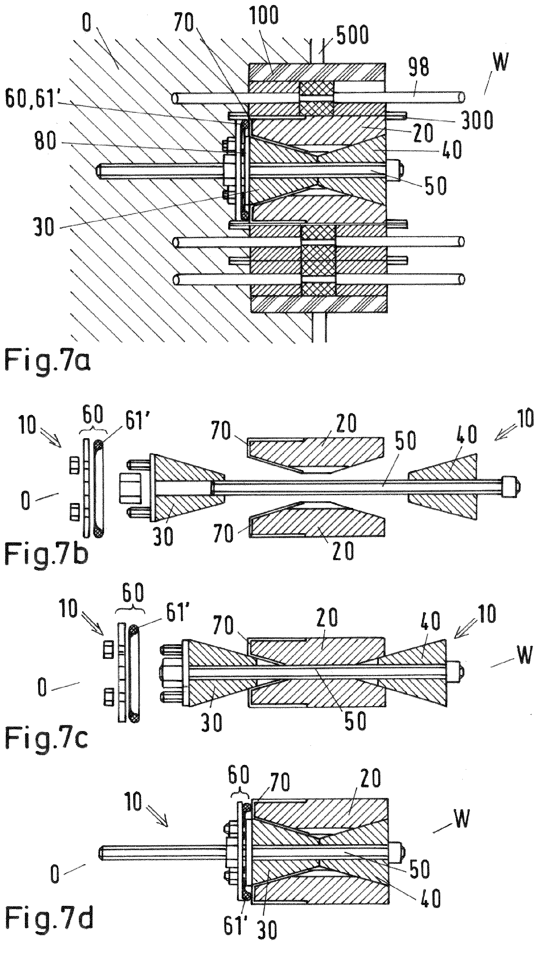

In the example shown in Fig. 7a, the desired shielding is formed by the interaction of the conductive layers 70 with a structure arranged on the front side 31 of the front tension member 30, which comprises the sealing layout 60 and a metal sheet 80. The metal sheet 80 has a front side 83 and a back side 82. The sealing layout 60 has a folded metallic wire mesh 61. Metal wire sealing cords or metal pads are inserted in the metallic wire mesh. The sealing layout 60 and the position of the metal sheet 80 correspond to the embodiment described in Fig. 2.

Fig. 7a shows a completed transit, namely a metal frame 100 installed into the division with cables 98, modules 400 and anchor plates 300.

Fig. 7b is a schematic section trough the complete EMC barrier of all grounded metal parts, namely conductive layers 70, sealing layout 60, metal sheet 80 and screw element 50, as well as the elastic rubber parts of the wedge seal 10, namely pressure members 20 and tension members 30, 40. As can also be seen from Fig. 7a, the complete EMC barrier formed by the grounded metal parts prohibits that the electromagnetic waves from side "O" from getting through the penetration to side "W" or vice versa.

Fig. 7c shows the partly compressed wedge 10. Numbers indicate the same parts as in Fig. 7a, 7b and 7d.

Fig. 7d shows the completed installation with fully compressed wedge seal. Again, numbers indicate the same parts as described above for Fig. 7a, 7b and 7d.

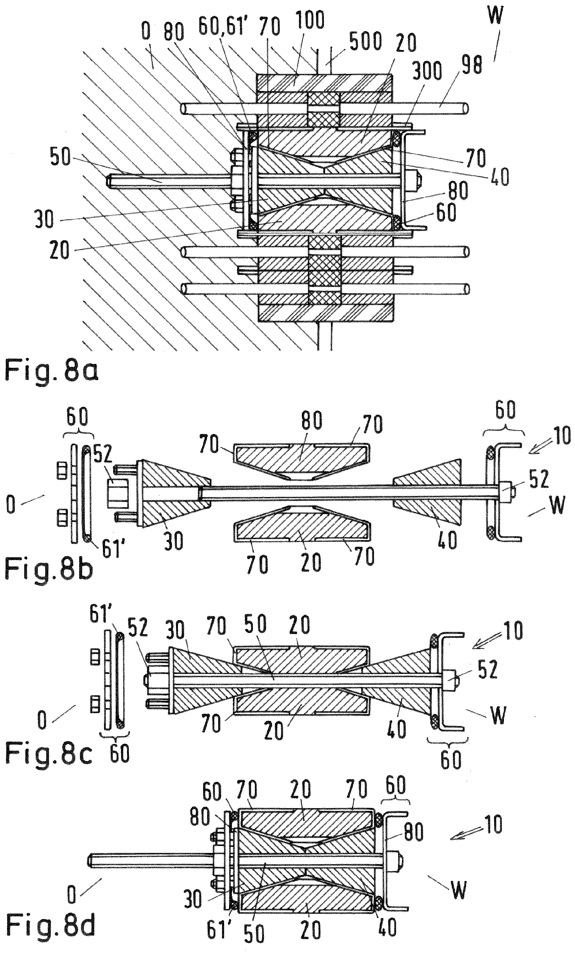

Like Fig. 7a, also Fig. 8a shows a completed transit, namely a metal frame 100 installed into the division with cables 98, modules 400 and anchor plates 300. With regard to the arrangement and designation of the individual components which are identical between the two embodiments of Fig. 7a, 7b, 7c, 7d and Fig. 8a, 8b, 8c, 8d reference is made here to what has already been stated with regard to Fig. 7a, 7b, 7c, 7d in order to avoid unnecessary duplication. Identical reference numbers also designate identical components.

Fig. 8b is a schematic section trough the complete EMC barrier of all grounded metal parts, namely conductive layers 70, sealing layout 60, metal sheet 80 and screw element 50, as well as the elastic rubber parts of the wedge seal 10, namely pressure members 20 and tension members 30, 40. As can also be seen from Fig. 8a, the complete EMC barrier formed by the grounded metal parts prohibits that the electromagnetic waves from side "O" from getting through the penetration to side "W" or vice versa.

Fig. 8c shows the partly compressed wedge 10. Numbers indicate the same parts as in Fig. 8a, 8b and 8d.

Fig. 8d shows the completed installation with fully compressed wedge seal. Again, numbers indicate the same parts as described above for Fig. 8a, 8b and 8d.

The embodiment example of Fig. 8a, 8b, 8c and 8d differs from the embodiment example shown in Fig. 7a, 7b, 7c and 7d by the number of sealing arrangements. While them embodiment shown in Fig. 7a, 7b, 7c and 7d has an sealing layout 60 and metal sheet 80 only on the operating side O, the embodiment shown in Fig. 8a, 8b, 8c and 8d has also an according EMC barrier formed at the opposing side W. While the sealing layout 60 and EMC barrier at the side O is a EMC barrier according to the embodiment shown in Fig. 2, the sealing layout 60 and EMC barrier at the side W is a EMC barrier according to the embodiment shown in Fig. 1. In a further - not shown embodiment, there can also be two EMC barriers, both according to the embodiment shown in Fig. 2, one at the side O and the other one at the side W.

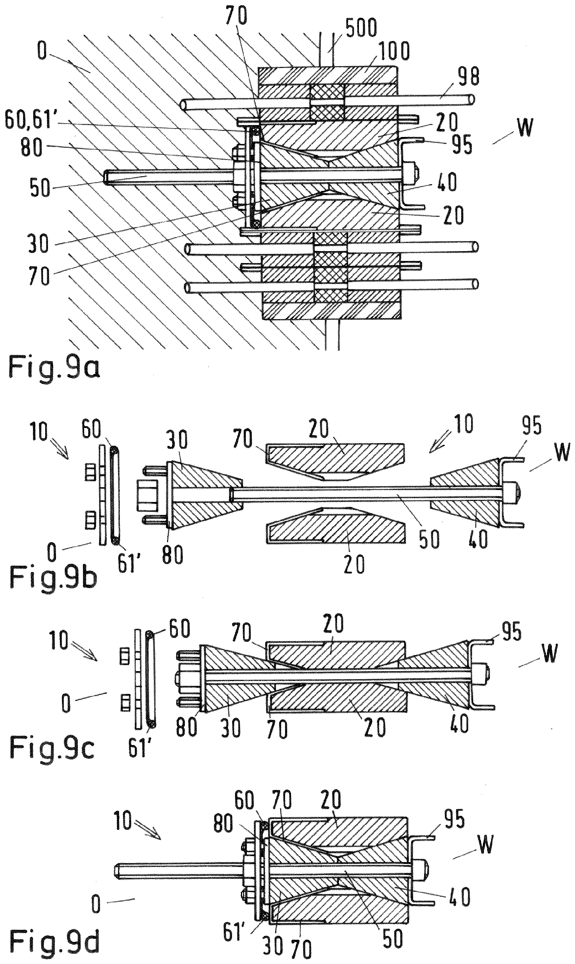

Like Fig. 7a, and 8a also Fig. 9a shows a completed transit, namely a metal frame 100 installed into the division with cables 98, modules 400 and anchor plates 300. With regard to the arrangement and designation of the individual components which are identical between the two embodiments of Fig. 7a, 7b, 7c, 7d and Fig. 8a, 8b, 8c, 8d reference is made here to what has already been stated with regard to Fig. 7a, 7b, 7c, 7d in order to avoid unnecessary duplication. Identical reference numbers also designate identical components.

Fig. 9b is a schematic section trough the complete EMC barrier of all grounded metal parts, namely conductive layers 70, sealing layout 60, metal sheet 80 and screw element 50, as well as the elastic rubber parts of the wedge seal 10, namely pressure members 20 and tension members 30, 40. As can also be seen from Fig. 9a, the complete EMC barrier formed by the grounded metal parts prohibits that the electromagnetic waves from side "O" from getting through the penetration to side "W" or vice versa.

Fig. 9c shows the partly compressed wedge 10. Numbers indicate the same parts as in Fig. 9a, 9b and 9d.

Fig. 9d shows the completed installation with fully compressed wedge seal. Again, numbers indicate the same parts as described above for Fig. 9a, 9b and 9d.

The embodiment example of Fig. 9a, 9b, 9c and 9d differs from the embodiment example shown in Fig. 7a, 7b, 7c and 7d by having a shock proof plate 95 arranged at the side "W" opposite the EMC seal arranged at side "O" In both cases the EMC barrier at side "O" corresponds to the embodiment also shown in Fig. 2.

The invention is not limited to any of the above-described embodiments, but can be modified in a variety of ways.

In any event a wedge seal 10 for sealing a cable and/or pipe passage is preferred, the wedge seal 10 comprising two wedge-shaped pressure members 20, a wedge-shaped front tension member 30 and a wedge-shaped rear tension member 40, the wedge-shaped pressure members 20 and the wedge-shaped tension members 30, 40 each having a wide base side 21, 31, 41 and an opposite narrow tip side 22, 32, 42, wherein the tension members 30, 40 are connected to each other with at least one screw element 50 in such a way that they can be moved towards or away from each other by turning the screw element 50, wherein the pressure members 20 are held against each other by means of spring force and wherein the tension members 30, 40 are arranged between the pressure members 20 in such a way that the pressure members 20 can be moved towards or away from each other by turning the screw element 50, wherein the pressure members 20 are moved away from each other in direction P against the spring force when the tension members 30, 40 are moved towards each other in direction S by means of the screw element 50, and wherein the wedge seal 10 comprises an EMC seal 60. Such a wedge seal 10 has an operating side O and that the EMC seal 60 is arranged on the operating side O of the wedge seal 10. In the mounted state of the wedge seal 10, the EMC seal 60 forms a closed surface with the electrically conductive layers 70 of the pressure members 20 and the metallic frame 200 of the cable or pipe passage 100 in which the wedge seal 10 is mounted.

The EMC seal 60 comprises a foldable metallic wire mesh 61. Inside that wire mesh 61, a flexible metal wire sealing cord 62 and/or a metal pad 62' is inserted. Alternatively, the EMC seal 60 is a metal-fabric profile 61'.

In any event, the EMC seal 60 has at least one opening 63 for receiving the screw element 50 and the wedge seal 10 comprises a metal sheet 80. The metal sheet 80 is flat or U-shaped and it has at least one opening 81 for receiving the screw element 50.

In one embodiment, the EMC seal 60 is arranged between the metal sheet 80 and the front 31 of the front tension member 30. Alternatively, the EMC seal 60 is clamped down between the metal sheet 80 and the metal frame 90.

For mounting the wedge seal 10 and for providing supporting the formation of a shielding all over the cable and/or pipe passage, it is advantageous if EMC metal anchor plate 300 are arranged above and/or below the wedge seal 10, in the assembled state. Further it is of advantage, if the width of the EMC seal 60 is not much larger than the width of the wedge seal 10 in the assembled state.

All of the features and advantages, including constructional details, spatial arrangements, and process steps, arising from the claims, the description, and the drawing may be essential to the invention both individually and in a wide variety of combinations.

### Reference signs

- O: operating side
- W: wall side
- P: direction
- S: direction

- 10: Wedge seal

- 20: pressure member
- 21: base side
- 22: tip side
- 23: angled side
- 24: front side

- 30: front tension member
- 31: base side, front side
- 32: tip side
- 33: angled side

- 40: rear tension member
- 41: base side
- 42: tip side
- 43: angled side

- 50: screw element
- 51: thread rod
- 52: operating device
- 521: bottom
- 53: locknut
- 531: bottom

- 60: EMC seal
- 61: metallic wire mesh
- 62: metal wire sealing cord
- 62': metal pad
- 63: opening
- 64: metal fabric profile

- 70: conductive layer

- 80: metal sheet
- 81: opening
- 82: back side
- 83: front side
- 84: mounting

- 90: frame
- 91: opening
- 92: mounting
- 93: fastening means

- 95: shock proof plate

- 98: cable

- 100: cable and/or pipe passage
- 200: metallic frame
- 300: anchor plate
- 400: cable or pipe package

## Claims

1. A wedge seal (10) for electromagnetic shielded cable and pipe transits for sealing a cable and/or pipe passage (100), the wedge seal (10) comprising two wedge-shaped pressure members (20), a wedge-shaped front tension member (30) and a wedge-shaped rear tension member (40),
• the wedge-shaped pressure members (20) and the wedge-shaped tension members (30, 40) each having a wide base side (21, 31, 41) and an opposite narrow tip side (22, 32, 42),
• wherein the tension members (30, 40) are connected to each other with at least one screw element (50) in such a way that they can be moved towards or away from each other by turning the screw element (50)
• wherein the pressure members (20) are held against each other by means of spring force
• and wherein the tension members (30, 40) are arranged between the pressure members (20) in such a way that the pressure members (20) can be moved towards or away from each other by turning the screw element (50),
• wherein the pressure members (20) are moved away from each other in direction P against the spring force when the tension members (30, 40) are moved towards each other by means of the screw element (50), and wherein the pressure members (20) are moved towards each other in direction S in-line with the spring force when the tension members (30, 40) are moved away from each other by means of the screw element (50),
**characterized in that** the wedge seal (10) comprises at least one EMC seal, wherein the EMC seal comprises a sealing layout (60) and metal layer (70), which covers the pressure members (20) at least partly.

2. Wedge seal according to claim 1, **characterized in that** the wedge seal (10) has an operating side (O) and that the sealing layout (60) is arranged on the operating side (O) of the wedge seal (10).

3. Wedge seal according to one of the preceding claims, **characterized in that** the sealing layout (60) in the mounted state of the wedge seal (10) forms a flat surface with the metal frame (200) of the cable and/or pipe passage (100) in which the wedge seal (10) is mounted.

4. Wedge seal according to any one of the preceding claims, **characterized in that** the sealing layout (60) comprises an in thickness flexible and compressible metallic wire mesh (61).

5. Wedge seal according to claim 5, **characterized in that** inside the wire mesh (61), a flexible metal wire sealing cord (62) and/or a metal pad (62') is inserted.

6. Wedge seal according to any one of the preceding claims, **characterized in that** the sealing layout (60) comprises a flexible metal-mesh profile (61').

7. Wedge seal according to one of the preceding claims, **characterized in that** the sealing layout (60) has at least one opening (63) for receiving the screw element (50).

8. Wedge seal according to any one of the preceding claims, **characterized in that** the wedge seal (10) comprises a metal sheet (80).

9. Wedge seal according to claim 8, **characterized in that** the metal sheet (80) is flat or U-shaped.

10. Wedge seal according to one of claims 9 or 10, **characterized in that** the sheet metal (80) has at least one opening (81) for receiving the screw element (50).

11. Wedge seal according to one of claims 9 to 11, **characterized in that** the sealing layout (60) is arranged between the metal sheet (80) and the front (31) of the front tension member (30) forming a closed electromagnetic barrier connected to the passage frame and pipe / cable packages.

12. Wedge seal according to one of the preceding claims, **characterized in that,** the sealing layout (60) comprises a metal sheet (80) which is conceived as a two-part item.

13. Wedge seal according to one of the preceding claims, **characterized in that** the EMC seal has an overlap of the metallic frame front side left and right of the wedge position in the frame.

14. Wedge seal according to one of the preceding claims, **characterized in that,** the wedge seal further comprises a shock proof (95) arrangement.
